# EUROPEAN PATENT SPECIFICATION

(11) **EP 1 369 460 B1**
(45) Date of publication and mention of the grant of the patent: **31.10.2012**
(21) Application number: 02716304.7
(22) Date of filing: 11.01.2002
(51) Int. Cl.: C08L 101/00, C08L 69/00, C08G 64/18, C08L 25/18, C08L 25/08, C08K 5/42, C08L 83/04, C08K 5/00, C08G 77/448

(54) **RESIN AND RESIN COMPOSITIONS FOR LASER MARKING AND MOLDED ARTICLES OF THESE**
HARZ UND HARZZUSAMMENSETZUNGEN FÜR DIE LASERMARKIERUNG UND DARAUS HERGESTELLTE FORMKÖRPER
RESINE ET COMPOSITIONS DE RESINE DESTINEES AU MARQUAGE AU LASER ET ARTICLES MOULES OBTENUS

(30) Priority: 22.01.2001 JP 2001013410; 08.03.2001 JP 2001064778; 12.03.2001 JP 2001068332
(43) Date of publication of application: 10.12.2003
(60) Divisional application: 10166503.2
(73) Proprietor: IDEMITSU KOSAN CO., LTD., Tokyo 100-8321 (JP)
(72) Inventor: NODERA, Akio, Ichihara-shi, Chiba 299-0107 (JP)
(74) Representative: Gille Hrabal
(86) International application number: PCT/JP2002/000139
(87) International publication number: WO 2002/057369

(56) References cited:
- EP-A- 0 522 751
- EP-A- 0 533 441
- EP-A- 1 142 956
- EP-A1- 0 604 080
- WO-A1-94/19408
- JP-A- 9 020 856
- JP-A- 11 001 596
- US-A- 3 971 756
- US-A- 4 110 299
- US-A- 4 226 961
- US-A- 4 263 201
- US-A- 5 021 508
- US-A- 5 300 350
- US-A- 5 840 791
- US-A- 5 840 791
- DATABASE WPI Section Ch, Week 199936 Derwent Publications Ltd., London, GB; Class A13, AN 1999-425111 XP002301395 -& JP 11 172063 A (ASAHI KASEI KOGYO KK) 29 June 1999 (1999-06-29)

## Description

### Technical Field

The present invention relates to a resin for laser marking, to a resin composition for laser marking (hereinafter the resin and the resin composition may be referred to as a "laser marking resin" and a "laser marking resin composition," respectively), and to a molded product formed from the resin or the resin composition. More particularly, the present invention relates to a laser marking resin and a laser marking resin composition which enable formation of a distinct marking on a molded product thereof through irradiation with a laser beam, and to such a molded product.

### Background Art

Conventionally, marking on thermoplastic resin products has generally been performed through printing techniques employing ink; for example, spraying of ink by means of an inkjet technique, screen printing, and ink writing. In recent years, marking by means of a laser beam has also become of interest, since this technique enables simple and efficient marking. Laser marking is a technique for marking, for example, marks, barcodes, and images on the surface of such materials as metal, ceramic, or polymeric organic material by irradiating the surface with a laser beam.

Examples of the laser marking technique include (1) a marking method utilizing change in surface conditions [roughening or concaving] of an object through etching of the object by means of laser beam irradiation. However, this method has the drawback that the boundary between the laser-irradiated portion and the non-irradiated portion is not distinct. In view of the foregoing, there has been proposed an improvement to this method, in which a multi-layer structure formed from different resins is irradiated with a laser beam, thereby etching only the outermost resin layer. However, this improved method entails drawbacks, in that intricate processes are required for production of a molded product and laser beam irradiation conditions must be carefully regulated.

Also, there has been proposed (2) a marking method utilizing decoloration, discoloration, or modification of a pigment or dye located at a site of laser-beam irradiation [e.g., Japanese Patent Application Laid-Open (*kokai*) Nos. 3-10884 and 5-295274]. However, this method entails drawbacks, in that a limitation is imposed on the type of a pigment or dye which can be added to the laser-beam irradiation site, and the pigment or dye is readily decolored or colored under heating, leading to spreading of a discolored area and indistinct contours of marked letters.

Furthermore, there has been proposed (3) a marking method utilizing change in surface conditions [convexing] of an object by foaming of a resin material through laser beam irradiation [Japanese Patent Publication (*kokoku*) No. 2-47314]. However, this method involves the following problems: optimal laser beam irradiation conditions must be determined in accordance with the resin material to be employed; and, when the surface of a resin composition containing a plurality of resin components (generally, a plurality of resin materials are employed) is subjected to marking, large amounts of labor and time are required to determine optimal laser beam irradiation conditions.

Objects of the present invention are to provide a laser marking resin, a laser marking resin composition and a molded product formed from the resin or the composition each enabling formation of a distinct marking on the product through irradiation with a laser beam, and exhibit excellent recyclability.

### Disclosure of the Invention

The present inventor has performed extensive studies, and on the basis of the results of the studies has accomplished the invention described below.

The present inventor has found that the objects of the present invention can be effectively achieved by provision of a laser marking resin containing an aromatic polycarbonate copolymer including a polyorganosiloxane structural unit in a specific amount, or of a laser marking resin composition containing the aromatic polycarbonate copolymer and an aromatic polycarbonate. The invention has been accomplished on the basis of this finding.

The invention provides the following.
1. A laser marking resin composition comprising
   an aromatic polycarbonate copolymer (A) in an amount of 0.2 to 99.9 mass%, the copolymer (A) containing a polyorganosiloxane structural unit in an amount of 0.1 to 50 mass%, and
   an aromatic polycarbonate resin (B) in an amount of 0.1 to 99.8 mass%, the aromatic polycarbonate resin (B) being composed of an aromatic polycarbonate structural unit, optionally having an alkylphenoxy group having a C10-C35 alkyl substituent and serving as an end group;
   wherein the amount of the polyorganosiloxane structural unit in the resultant resin composition is 0.1 to 10 mass%;
   which further comprises a polytetrafluoroethylene (C), in an amount of 0.01 to 2 parts by mass on the basis of 100 parts by mass of the total amount of the components (A) and (B).
2. A laser marking resin composition according to term [1] above, wherein the aromatic polycarbonate copolymer (A) contains a polyorganosiloxane structural unit in an amount of 0.1 to 50 mass%, and has an alkylphenoxy group having a C10-C35 alkyl substituent and serving as an end group.
3. A laser marking resin composition according to term [1] or [2] above, wherein the aromatic polycarbonate resin (B) has an alkylphenoxy group having a C10-C35 alkyl substituent and serving as an end group.
4. A molded product formed through molding of a laser marking resin or a laser marking resin composition as recited in any of the terms [1] through [3] above.
5. A molded product according to term [4], which is an electric/electronic apparatus part, a machine part, or an automobile part.

### Best mode for Carrying Out the Invention

Embodiments of the present invention will next be described in detail.

The present invention provides a laser marking resin containing an aromatic polycarbonate copolymer which contains a polyorganosiloxane structural unit in an amount of 0.1 to 10 mass%. Regarding the aromatic polycarbonate copolymer containing a polyorganosiloxane structural unit, copolymers having various structures are known. Examples of the aromatic polycarbonate copolymer include copolymers described in Japanese Patent Application Laid-Open (*kokai*) Nos. 50-29695, 3-292359, 4-202465, 8-81620, 8-302178, and 10-7897.

The aromatic polycarbonate copolymer has an aromatic polycarbonate structural unit represented by the below-described formula (1) and a polyorganosiloxane structural unit represented by the below-described formula (2). 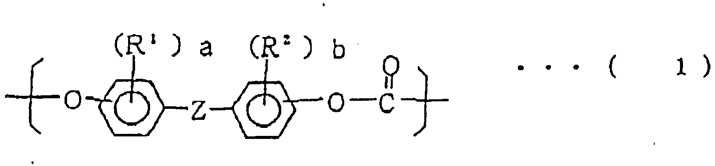 [wherein each of R¹ and R² represents a C1-C6 alkyl group or a phenyl group; Z represents a single bond, a C1-C20 alkylene group, a C2-C20 alkylidene group, a C5-C20 cycloalkylene group, a C5-C20 cycloalkylidene group, -SO₂-, -SO-, -S-, -0-, or -CO-; and each of "a" and "b" represents an integer of 0 to 4.] 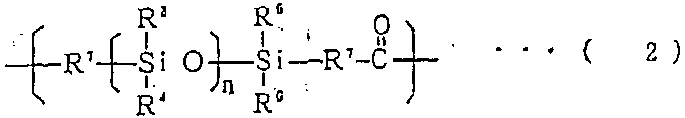 [wherein each of R³ through R⁶ represents a C1-C6 alkyl group or a phenyl group; R⁷ represents an organic residue including an aliphatic group or an aromatic group; and "n" represents an integer of 1 to 500.]

Examples of the C1-C6 alkyl group represented by each of R¹ through R⁶ in the aforementioned formulas (1) and (2) include a methyl group, an ethyl group, an n-propyl group, an i-propyl group, an n-butyl group, an i-butyl group, a sec-butyl group, a tert-butyl group, an n-pentyl group, and an n-hexyl group. Of these, a methyl group is preferred. Examples of the C1-C20 alkylene group represented by Z in the formula (1) include a methylene group, an ethylene group, a trimethylene group, and a tetramethylene group. Examples of the C2-C20 alkylidene group include an ethylidene group, a propylidene group, an isopropylidene group, a butylidene group, and a pentylidene group. Examples of the C5-C20 cycloalkylene group include a cyclopentylene group and a cyclohexylene group. Examples of the C5-C20 cycloalkylidene group include a cyclopentylidene group and a cyclohexylidene group. Examples of the organic residue represented by R⁷ in the formula (2) include an o-allylphenol residue, a p-hydroxystyrene residue, and a eugenol residue. In the polyorganosiloxane structural unit, "n" is more preferably 5 to 100.

The laser marking resin of the present invention contains the aromatic polycarbonate copolymer containing the aromatic polycarbonate structural unit represented by the aforementioned formula (1) and the polyorganosiloxane structural unit represented by the formula (2), wherein the amount of the polyorganosiloxane structural unit is 0.1 to 10 mass%. The aromatic polycarbonate copolymer containing the polyorganosiloxane structural unit in an amount falling within the above range is employed in the laser marking resin, for the following reasons. When the incorporation amount of the polyorganosiloxane structural unit is less than 0.1 mass%, the aromatic polycarbonate copolymer exhibits unsatisfactory laser marking properties, whereas when the incorporation amount of polyorganosiloxane structural unit exceeds 10 mass%, heat resistance and flame retardancy of the aromatic polycarbonate copolymer are lowered, and the copolymer becomes unsuitable for the use as a molding material.

Examples of the polyorganosiloxane structural unit contained in the aromatic polycarbonate copolymer include a polydimethylsiloxane structural unit, a polymethylphenylsiloxane structural unit, and a polydiphenylsiloxane structural unit. In the laser marking resin of the present invention, an aromatic polycarbonate copolymer containing a polydimethylsiloxane structural unit is preferably employed. The incorporation amount of the polyorganosiloxane structural unit is preferably 0.3 to 3 mass%.

The aromatic polycarbonate copolymer employed in the laser marking resin of the present invention is preferably an aromatic polycarbonate copolymer containing the polyorganosiloxane structural unit in an amount of 0.1 to 10 mass% and having an alkylphenoxy group having a C10-C35 alkyl substituent and serving as an end group. In general, an aromatic polycarbonate copolymer having a p-tert-butylphenoxy group serving as an end group is employed. However, in the case where the aromatic polycarbonate copolymer having such an end group is employed as a laser marking resin, when the resin is melted and subjected to molding, the melted resin exhibits low fluidity, possibly leading to poor moldability, particularly during the course of injection molding. In contrast, in the case where the aromatic polycarbonate copolymer which has an alkylphenoxy group having a C10-C35 alkyl substituent and serving as an end group is employed as a laser marking resin, when the resin is melted, the melted resin exhibits excellent fluidity, and moldability is enhanced, leading to enhancement of productivity of a molded product. Examples of the C10-C35 alkyl group include a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a heneicosyl group, a docosyl group, a tricosyl group, a tetracosyl group, a pentacosyl group, a hexacosyl group, a heptacosyl group, an octacosyl group, a nonacosyl group, a triacontyl group, a hentriacontyl group, a dotriacontyl group, a tritriacontyl group, a tetratriacontyl group, and a pentatriacontyl group.

The aromatic polycarbonate copolymer employed in the laser marking resin of the present invention has a viscosity average molecular weight of 10,000 to 40,000, preferably 12,000 to 30,000. When the viscosity average molecular weight of the aromatic polycarbonate copolymer is less than 10,000, the resultant molded product may exhibit insufficient mechanical properties and heat resistance, whereas when the viscosity average molecular weight exceeds 40,000, the melted resin may exhibit low fluidity, leading to poor moldability.

The method for producing the aromatic polycarbonate copolymer will next be described. The copolymer can be produced through, for example, the following procedure: an aromatic polycarbonate oligomer for forming an aromatic polycarbonate segment of the copolymer and a polyorganosiloxane having, at an end of the molecule, a reactive group (e.g., an o-allylphenol group, a p-hydroxystyrene group, or a eugenol residue) for forming a polyorganosiloxane segment of the copolymer are dissolved in a solvent such as methylene chloride, chlorobenzene, or chloroform; a caustic alkali aqueous solution of dihydric phenol is added to the resultant solution; and the resultant mixture is subjected to interfacial polycondensation by use of a catalyst (e.g., a tertiary amine such as triethylamine or a quaternary ammonium salt such as trimethylbenzylammonium chloride) in the presence of a phenol compound serving as a terminal stopper.

The aromatic polycarbonate oligomer may be produced through, for example, reaction between a dihydric phenol compound and a carbonate precursor (e.g., phosgene or a carbonic acid ester compound) in a solvent such as methylene chloride. Alternatively, the oligomer may be produced through ester interchange reaction between a dihydric phenol compound and a carbonate precursor such as diphenyl carbonate.

Examples of the dihydric phenol compound which may be employed herein include 4,4'-dihydroxydiphenyl; bis(4-hydroxyphenyl)alkanes such as 1,1-bis(4-hydroxyphenyl)methane, 1,1-bis(4-hydroxyphenyl)ethane, 2,2-bis(4-hydroxyphenyl)propane, 2,2-bis(3-methyl-4-hydroxyphenyl)propane, 2,2-bis(3-phenyl-9-hydroxyphenyl)propane, and 2,2-bis(3,5-dimethyl-4-hydroxyphenyl)propane; bis(4-hydroxyphenyl)cycloalkanes such as 1,1-bis(4-hydroxyphenyl)cyclohexane; bis(9-hydroxyphenyl) sulfide; bis(4-hydroxyphenyl) sulfone; bis(4-hydroxyphenyl) sulfoxide; bis(4-hydroxyphenyl) ether; and 4,4'-dihydroxybenzophenone. Of these, 2,2-bis(4-hydroxyphenyl)propane (Bisphenol A) is particularly preferred. These dihydric phenol compounds may be employed singly or in combination of two or more species. Examples of the carbonic acid ester compound include diaryl carbonates such as diphenyl carbonate; and dialkyl carbonates such as dimethyl carbonate and diethyl carbonate.

The aromatic polycarbonate oligomer may have a linear structure or a branched structure. When an aromatic polycarbonate oligomer having a branched structure is produced, a branching agent is employed. Examples of the branching agent which may be employed include polyfunctional aromatic compounds such as 1,1,1-tris(4-hydroxyphenyl)ethane, α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl)ethyl]benzene, phloroglucin, trimellitic acid, and isatin bis(o-cresol).

Examples of the terminal stopper which may be employed include phenol, p-cresol, p-tert-butylphenol, p-tert-octylphenol, p-cumylphenol, p-nonylphenol, p-tert-amylphenol, bromophenol, tribromophenol, and pentabromophenol. Of these, phenol compounds containing no halogen atom are preferred, since they less adversely affect the environment.

When an aromatic polycarbonate copolymer containing the polyorganosiloxane structural unit in a predetermined amount and having such an alkylphenoxy group that has a C10-C35 alkyl substituent and serves as an end group is produced as the laser marking resin of the present invention, a terminal stopper; for example, docosylphenol, tetracosylphenol, hexacosylphenol, octacosylphenol, triacontylphenol, dotriacontylphenol, or tetratriacontylphenol, may be employed.

The laser marking resin composition of the present invention contains an aromatic polycarbonate copolymer (component (A)) in an amount of 0.2 to 99.9 mass%, the copolymer containing an polyorganosiloxane structural unit in an amount of 0.1 to 50 mass%; and an aromatic polycarbonate resin (component (B)) in an amount of 0.1 to 99.8 mass%, wherein the amount of the polyorganosiloxane structural unit is 0.1 to 10 mass%. In the case where the laser marking resin composition is prepared, when an aromatic polycarbonate copolymer containing a large amount of the polyorganosiloxane structural unit is employed as the component (A), the amount of the copolymer in the composition is reduced, or when an aromatic polycarbonate copolymer containing a small amount of the polyorganosiloxane structural unit is employed as the component (A), the amount of the copolymer in the composition is increased, such that the amount of the polyorganosiloxane structural unit in the resultant resin composition falls within a range of 0.1 to 10 mass%.

An aromatic polycarbonate copolymer containing the polyorganosiloxane structural unit in an amount of 0.1 to 50 mass% and having such an alkylphenoxy group that has a C10-C35 alkyl substituent and serves as an end group may be employed as the component (A). Alternatively, a mixture obtained by mixing, at an arbitrary ratio, an aromatic polycarbonate copolymer having such a long-chain alkylphenoxy group serving as an end group with an aromatic polycarbonate copolymer which does not have such a long-chain alkylphenoxy group at its end may be employed as the component (A).

The aromatic polycarbonate resin (component (B)) is an aromatic polycarbonate resin which has aromatic polycarbonate structural unit is generally employed as a molding material. Alternatively, an aromatic polycarbonate resin having, at an end of the molecule, an alkylphenoxy group having a C10-C35 alkyl substituent may be employed as the component (B). Alternatively, a mixture obtained by mixing, at an arbitrary ratio, an aromatic polycarbonate resin having such a long-chain alkylphenoxy group serving as an end group with an aromatic polycarbonate resin which does not have such a long-chain alkylphenoxy group at its end may be employed as the component (B). The aromatic polycarbonate resin (component (B)) has a viscosity average molecular weight of 10,000 to 40,000, preferably 12,000 to 30,000.

The laser marking resin composition of the present invention further contains a polytetrafluoroethylene (component (C)) in an amount of 0.01 to 2 parts by mass on the basis of 100 parts by mass of the total amount of the aforementioned components (A) and (B). When the incorporation amount of the component (C) is less than 0.01 parts by mass, the resultant resin composition exerts an insufficient melting/dripping prevention effect. Even when the incorporation amount of the component (C) is 2 parts by mass or less, the composition exerts a sufficient melting/dripping prevention effect. However, when the amount of the component (C) contained in the composition exceeds 2 parts by mass, the impact resistance of the resultant resin composition is lowered. The incorporation amount of the component (C) is preferably 0.1 to 1 parts by mass.

The polytetrafluoroethylene employed herein as the component (C) has an average molecular weight of at least 500,000, preferably 500,000 to 10,000,000, more preferably 1,000,000 to 10,000,000. The component (C) is preferably a polytetrafluoroethylene exhibiting fibril formability, since the polytetrafluoroethylene exhibits an excellent melting/dripping prevention effect and can impart high flame retardancy to the resin composition. Such a polytetrafluoroethylene exhibiting fibril formability is preferably a polytetrafluoroethylene produced through, for example, the following procedure: tetrafluoroethylene is polymerized in an aqueous solvent at a pressure of 7 to 700 kPa and a temperature of 0 to 200°C (preferably 20 to 100°C) in the presence of sodium, potassium, or ammonium peroxydisulfide. Examples of commercially available polytetrafluoroethylene which may be employed include Teflon 6-J (available from Du Pont-Mitsui Fluorochemicals Co., Ltd.); Polyflon D-1, Polyflon F-103, Polyflon MPA, and Polyflon FA-100 (available from Daikin Industries, Ltd.); and Algoflon F5 (available from Montefluos).

If desired, the laser marking resin or the laser marking resin composition of the present invention may further contain, in a typical incorporation amount, an additive which is generally employed for aromatic polycarbonate resins, such as an antioxidant, a plasticizer, a stabilizer, an antistatic agent, a slipping agent, an antiblocking agent, or an anti-clouding agent.

When the laser marking resin composition is produced, the components of the composition can be mixed or melt-kneaded by the use of an apparatus which is employed for mixing or melt-kneading of aromatic polycarbonate resins; for example, a Banbury mixer, a roll, a single-screw extruder, or a multi-screw extruder. When the laser marking resin or the laser marking resin composition is molded into a variety of products, molding can be performed in a manner similar to that of a known technique for molding of an aromatic polycarbonate resin, such as injection molding, extrusion molding, or blow molding.

Examples of the laser marking apparatus which may be employed for marking of the thus-obtained molded product include marking apparatuses employing a laser beam, such as an excimer laser, a nitrogen laser, an Nd:YAG laser, a crystal laser, and a carbon dioxide gas laser.

The laser marking resin or the laser marking resin composition of the present invention does not contain a coloring material such as carbon black; i.e., the resin or the resin composition is a transparent or semi-transparent material. Therefore, a distinct white marking can be formed on a molded product formed from the resin or the resin composition. The molded product is suitable for use in a variety of electric/electronic apparatus parts, machine parts, automobile parts, and also in housings of office automation apparatuses and optical disks, and particularly in those parts, etc. which are formed from a transparent or semi-transparent material.

When a molded product formed through molding of the laser marking resin or the laser marking resin composition of the present invention (i.e., a transparent or semi-transparent material containing no coloring material) is recycled after the use thereof, the recycled product is less contaminated with impurities. Therefore, the recycled product exhibits good physical properties and has good appearance; i.e., the molded product has excellent recyclability. The transparent or semi-transparent material may be colored by the use of a favorable coloring material with arbitrary color other than white.

The present invention will next be described in more detail with reference to Examples and Comparative Examples, but the invention is not limited to the Examples.

### [Example 1] (not part of the invention)

### (1) Production of polycarbonate oligomer

2,2-Bis(4-hydroxyphenyl)propane (60 kg), serving as a raw material, was dissolved in a 5 mass% sodium hydroxide aqueous solution (400 liter).

Subsequently, the resultant raw material solution (138 liter/hour) and methylene chloride (69 liter/hour), serving as a solvent, were fed, through an orifice plate, to a tubular reactor (inner diameter: 10 mm, length: 10 m) having a double-tube structure and being equipped with a jacket (the temperature of the reactor can be regulated through application of water to the jacket). Subsequently, phosgene (10.7 kg/hour) was fed to the reactor in parallel with the flow of the raw material solution, and the temperature of the reactor was maintained at 25°C, to thereby allow reaction to proceed for three hours continuously. During the process of reaction, the pH of a discharged liquid was regulated to 10 to 11.

After completion of reaction, the resultant reaction mixture was allowed to stand so as to separate the aqueous phase from the mixture, thereby yielding a methylene chloride phase (220 liter). The polycarbonate oligomer dissolved in the methylene chloride phase was found to have a polymerization degree of 2 to 4, and the concentration of a chloroformate group was found to be 0.7 N. The concentration of the polycarbonate oligomer in the methylene chloride phase was found to be 317 g/liter.

### (2) Production of reactive polydimethylsiloxane

Octamethylcyclotetrasiloxane (1,483 g) and 1,1,3,3-tetramethyldisiloxane (96 g), serving as raw materials, were mixed with sulfuric acid (concentration: 86 mass%, 35 g), and the resultant mixture was stirred at room temperature for 17 hours. Thereafter, the oil phase was separated from the mixture, and sodium hydrogencarbonate (25 g) was added to the oil phase, followed by stirring for one hour. Subsequently, the sodium hydrogencarbonate was removed through filtration, and then the resultant residue was subjected to distillation under reduced pressure (400 Pa) at 150°C, to thereby remove low-boiling-point compounds and yield an oil.

Subsequently, a mixture of 2-allylphenol (60 g) and a platinum chloride alcoholate complex (0.0014 g) was added to the above-obtained oil (294 g), and the resultant mixture was stirred at a temperature of 90 to 115°C for three hours, to thereby allow reaction to proceed. After completion of reaction, the resultant product was subjected to extraction with methylene chloride, and then washed with 80 mass% aqueous methanol three times, to thereby remove excess 2-allylphenol. The resultant product was dried over anhydrous sodium sulfate, and the solvent was removed from the product through evaporation at 115°C under reduced pressure. The thus-obtained reactive polydimethylsiloxane was subjected to ¹H-NMR measurement, and the number of dimethylsilanoxy structural repeating units was found to be 30.

### (3) Production of aromatic polycarbonate copolymer

A methylene chloride solution (10 liter) of the polycarbonate oligomer produced in section (1) above was mixed with a solution prepared by dissolving the reactive polydimethylsiloxane (182 g) produced in section (2) above in methylene chloride (2 liter). To the resultant solution mixture were added a solution prepared by dissolving sodium hydroxide (26 g) in water (1 liter), methylene chloride (8 liter), and p-t-butylphenol (96 g), and the resultant mixture was stirred at room temperature and at 500 rpm, to thereby allow reaction to proceed for two hours.

After completion of reaction, the resultant reaction product was dissolved in methylene chloride (5 liter), and the resultant solution was washed with water (5 liter). Subsequently, the resultant solution was washed with a 0.03 N sodium hydroxide aqueous solution (5 liter), washed with a 0.2 N hydrochloric acid aqueous solution (5 liter), and then washed with water (5 liter) twice. Thereafter, the methylene chloride was removed from the methylene chloride solution of the reaction product through evaporation under reduced pressure, to thereby yield a flaky aromatic polycarbonate copolymer. The flaky copolymer was dried under vacuum at 120°C over 24 hours.

The thus-obtained aromatic polycarbonate copolymer was found to have a viscosity average molecular weight of 17,000 and to contain a polydimethylsiloxane structural unit in an amount of 4.0 mass%. The viscosity average molecular weight of the copolymer was calculated from its intrinsic viscosity [η], which had been obtained on the basis of the viscosity of a methylene chloride solution of the copolymer as measured at 20°C by the use of an Ubbelohde type viscometer. The amount of the polydimethylsiloxane structural unit contained in the copolymer was obtained on the basis of the results of ¹H-NMR measurement of the copolymer; specifically, the amount of the structural unit was calculated on the basis of the ratio between the intensity of the absorption peak at 1.7 ppm corresponding to an isopropyl group of the 2,2-bis(4-hydroxyphenyl)propane residue of the copolymer chain and the intensity of the absorption peak at 0.2 ppm corresponding to a methyl group of the dimethylsiloxane structural unit.

### (4) Laser marking of molded product and evaluation of the marking

An antioxidant (0.3 parts by mass) [Irganox 1076 (available from Ciba Specialty Chemicals) (0.2 parts by mass) and Irgaphos 168 (available from Ciba Specialty Chemicals) (0.1 parts by mass)] was added to the aromatic polycarbonate copolymer produced in (3) above (100 parts by mass), and the resultant mixture was fed to an extruder [TEM-35, product of Toshiba Machine Co., Ltd.], and melt-kneaded at 260 to 280°C, to thereby yield pellets. The thus-obtained pellets were dried at 120°C for four hours, and then subjected to molding by use of an injection molding apparatus [100-EN, product of Toshiba Machine Co., Ltd.] under the following conditions: molding temperature: 250 to 280°C, die temperature: 80°C, to thereby form a square plate-like test piece (thickness: 2 mm, size: 15 cm x 15 cm). The test piece was colorless and transparent, and was found to have a haze of 2% as measured in accordance with JIS K 7105.

Subsequently, the characters " 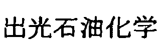 2001" were marked on the test piece by the use of a carbon dioxide gas laser marking apparatus [CLM-03, product of TDK Corporation] under the following operation conditions: wavelength of laser beam: 10.6 µm, scan speed: 200 mm/sec, output: 1 to 8 W (step: 0.2 W). As a result, a white marking was formed on the test piece.

The visibility of the marking was evaluated on the basis of (a) minimum laser output [w] required for forming, on the test piece, an marking which can be identified when the marked test piece is placed on a fluorescent lamp as a base; and (b) minimum laser output [w] required for forming, on the test piece, an marking which can be identified when the marked test piece is placed on a gray paper sheet as a base. Three persons evaluated the visibility of the marking through visual observation. The average of the evaluations by the three persons was employed for evaluation of conspicuousness of the marking. The results are shown by the following four ratings. AA: very good contrast between the base color and the marked letter color; BB: good contrast between the base color and the marked letter color; CC: fair contrast between the base color and the marked letter color; and DD: Poor contrast between the base color and the marked letter color.

### (5) Evaluation of physical properties of aromatic polycarbonate copolymer

In addition to laser marking properties, fluidity and flame retardancy of the aromatic polycarbonate copolymer produced in section (3) above were evaluated.

For evaluation of fluidity of the copolymer, the flow value of the copolymer was measured by means of the method in accordance with JIS K 7201 under the following conditions: temperature: 280°C, load: 1,568 N. For evaluation of flame retardancy, a test piece (thickness: 1.5 mm) formed from the copolymer was subjected to the vertical combustion test in accordance with Underwriters Laboratory Subject 94.

The results of the aforementioned evaluations are shown in Table 1.

### [Example 2] (not part of the invention)

### (1) Production of aromatic polycarbonate copolymer

A methylene chloride solution (10 liter) of a polycarbonate oligomer produced in a manner similar to that of Example 1 (1) was mixed with a solution prepared by dissolving the reactive polydimethylsiloxane (182 g) produced in Example 1 (2) in methylene chloride (2 liter). To the resultant solution mixture were added a solution prepared by dissolving sodium hydroxide (26 g) in water (1 liter), methylene chloride (8 liter), and p-dodecylphenol (including a branched dodecyl group) (168 g) serving as a terminal stopper, and the resultant mixture was stirred at room temperature and at 500 rpm, to thereby allow reaction to proceed for two hours.

The resultant reaction product was purified in a manner similar to that of Example 1 (3), to thereby yield an aromatic polycarbonate copolymer having a p-dodecylphenoxy group at an end of the molecule. The copolymer was found to have a viscosity average molecular weight of 17,000 and to contain a polydimethylsiloxane structural unit in an amount of 4.0 mass%.

### (2) Laser marking of molded product and evaluation of the marking

The procedure of Example 1 (4) was repeated, except that the aromatic polycarbonate copolymer produced in section (1) above was employed, to thereby form a test piece. The test piece was subjected to laser marking, followed by evaluation of the marked test piece.

### (3) Evaluation of physical properties of aromatic polycarbonate copolymer

In addition to laser marking properties, fluidity and flame retardancy of the aromatic polycarbonate copolymer produced in section (1) above were evaluated. The results are shown in Table 1.

### [Example 3]

### (1) Production of aromatic polycarbonate resin composition

The following components were employed as raw materials: component (A): the aromatic polycarbonate copolymer produced in Example 1 (3) (30 parts by mass); component (B): an aromatic polycarbonate resin having a viscosity average molecular weight of 17,000 and a melt flow rate of 19 g/10 minutes (temperature: 300°C, load: 11.77 N) [Toughlon A1900, available from Idemitsu Petrochemical Co., Ltd.] (70 parts by mass); and component (C): polytetrafluoroethylene [CD076, available from Asahi Glass Co., Ltd.] (0.3 parts by mass).

These components were mixed with the same antioxidant as that employed in Example 1 (3), and the resultant mixture was fed to a vent-type twin screw extrusion molding apparatus [TEM-35, product of Toshiba Machine Co., Ltd.], and melt-kneaded at 280°C, to thereby extrude aromatic polycarbonate resin composition strands. After being cooled, the strands were cut into pellets.

### (2) Laser marking of molded product and evaluation of the marking

The procedure of Example 1 (4) was repeated, except that the aromatic polycarbonate resin composition produced in section (1) above was employed, to thereby form a test piece. The test piece was subjected to laser marking, followed by evaluation of the marked test piece.

### (3) Evaluation of physical properties of aromatic polycarbonate resin composition

In addition to laser marking properties, fluidity and flame retardancy of the aromatic polycarbonate resin composition produced in section (1) above were evaluated. The results are shown in Table 1.

### [Example 4]

### (1) Production of aromatic polycarbonate resin

A methylene chloride solution (10 liter) of a polycarbonate oligomer produced in a manner similar to that of Example 1 (1) was placed in a reactor (inner volume: 50 liter) equipped with a stirring apparatus, and then p-dodecylphenol (including a branched dodecyl group) (162 g) serving as a terminal stopper was added to and dissolved in the solution. Subsequently, a solution prepared by dissolving sodium hydroxide (53 g) in water (1 liter) and triethylamine (5.8 milliliter) serving as a catalyst were added to the reactor, to thereby allow reaction to proceed for one hour under stirring at 300 rpm.

Subsequently, to the reactor containing the resultant reaction product were added a solution prepared by dissolving 2,2-bis(9-hydroxyphenyl)propane (720 g) in a solution containing water (5.5 liter) and sodium hydroxide (412 g) dissolved therein, and methylene chloride (8 liter) serving as a solvent, to thereby allow reaction to proceed for one hour under stirring at 500 rpm.

After completion of reaction, methylene chloride (7 liter) and water (5 liter) were added to the reactor, and the resultant mixture was stirred at 500 rpm for 10 minutes. After termination of stirring, the resultant mixture was allowed to stand, to thereby separate the mixture into an organic phase and an aqueous phase.

Subsequently, the organic phase was washed with a 0.03 N sodium hydroxide aqueous solution (5 liter), washed with a 0.2 N hydrochloric acid aqueous solution (5 liter), and then washed with water (5 liter) twice. Thereafter, the methylene chloride was removed from the organic phase through evaporation under reduced pressure, to thereby yield a flaky aromatic polycarbonate resin. The thus-obtained aromatic polycarbonate resin having a p-dodecylphenoxy group at an end of the molecule was found to have a viscosity average molecular weight of 17,500.

### (2) Production of aromatic polycarbonate resin composition

The procedure of Example 3 (1) was repeated, except that the aromatic polycarbonate resin produced in (1) above was employed as the component (B), to thereby prepare an aromatic polycarbonate resin composition.

### (3) Laser marking of molded product and evaluation of the marking

The procedure of Example 3 (2) was repeated, except that the aromatic polycarbonate resin composition produced in section (2) above was employed, to thereby form a test piece. The test piece was subjected to laser marking, followed by evaluation of the marked test piece.

### (4) Evaluation of physical properties of aromatic polycarbonate resin composition

In addition to laser marking properties, fluidity and flame retardancy of the aromatic polycarbonate resin composition produced in section (2) above were evaluated. The results are shown in Table 1.

### [Example 5]

### (1) Production of aromatic polycarbonate resin composition

The aromatic polycarbonate copolymer produced in Example 2 (1) serving as component (A) and the aromatic polycarbonate resin produced in Example 4 (1) serving as component (B) were melt-kneaded, to thereby produce an aromatic polycarbonate resin composition.

### (2) Laser marking of molded product and evaluation of the marking

The procedure of Example 3 (2) was repeated, except that the aromatic polycarbonate resin composition produced in section (1) above was employed, to thereby form a test piece. The test piece was subjected to laser marking, followed by evaluation of the marked test piece.

### (3) Evaluation of physical properties of aromatic polycarbonate resin composition

In addition to laser marking properties, fluidity and flame retardancy of the aromatic polycarbonate resin composition produced in section (1) above were evaluated. The results are shown in Table 1.

### [Comparative Example 1]

The procedure of Example 1 was repeated, except that the aromatic polycarbonate resin employed as the component (B) in Example 3 was employed as an aromatic polycarbonate resin. The results are shown in Table 1.

### [Comparative Example 2]

The procedure of Example 1 was repeated, except that the aromatic polycarbonate resin produced in Example 4 (1) was employed as an aromatic polycarbonate resin. The results are shown in Table 1.

### [Comparative Example 3]

The procedure of Example 3 was repeated, except that an aromatic polycarbonate resin composition was produced from the aromatic polycarbonate resin employed as the component (B) in Example 3 and the component (C) employed in Example 3. The results are shown in Table 1.

### [Comparative Example 4]

The procedure of Example 3 was repeated, except that an aromatic polycarbonate resin composition was produced from the aromatic polycarbonate resin employed as the component (B) in Example 3 and dimethylsilicone [SH200, available from Dow Corning Toray Silicone Co., Ltd.] (instead of the component (C) employed in Example 3). The results are shown in Table 1.

**Table 1 (1)**

| Examples | | | Example 1 | Example 2 | Example 3 |
|---|---|---|---|---|---|
| Composition mass% | (A) | Aromatic polycarbonate copolymer | 100 | - | 30 |
| | | End-modified product of the above copolymer | - | 100 | - |
| | (B) | Aromatic polycarbonate resin | - | - | 70 |
| | | End-modified product of the above resin | - | - | - |
| | (C) | Polytetrafluoroethylene (parts by mass) | - | - | 0.3 |
| | | Dimethylsilicone | - | - | - |
| Marking properties | Color of test piece | | Colorless and transparent | Colorless and transparent | Milky white |
| | Haze of test piece (%) | | 2 | 2 | 60 |
| | Color of marking | | White | White | White |
| | Conspicuousness of marking | | AA | AA | BB |
| | Laser minimum output required for forming an identifiable marking (W) [fluorescent lamp] | | 1.0 | 0.8 | 1.2 |
| | Laser minimum output required for forming an identifiable marking (W) [gray paper sheet] | | 2.2 | 2.0 | 2.6 |
| Other physical properties | Flame retardancy [UL94/1.5 mm] | | V-2 | V-2 | V-0 |
| | Flow value [280°C/1568 N] | | 16 | 22 | 12 |

**Table 1 (2)**

| Examples | | | Example 4 | Example 5 |
|---|---|---|---|---|
| Composition mass% | (A) | Aromatic polycarbonate copolymer | 30 | - |
| | | End-modified product of the above copolymer | - | 30 |
| | (B) | Aromatic polycarbonate resin | - | - |
| | | End-modified product of the above resin | 70 | 70 |
| | (C) | Polytetrafluoroethylene (parts by mass) | 0.3 | 0.3 |
| | | Dimethylsilicone | - | - |
| Marking properties | Color of test piece | | Milky white | Milky white |
| | Haze of test piece (%) | | 60 | 60 |
| | Color of marking | | White | White |
| | Conspicuousness of marking | | BB | BB |
| | Laser minimum output required for forming an identifiable marking (W) [fluorescent lamp] | | 1.2 | 1.0 |
| | Laser minimum output required for forming an identifiable marking (W) [gray paper sheet] | | 2.6 | 2.2 |
| Other physical properties | Flame retardancy [UL94/1.5 mm] | | V-0 | V-0 |
| | Flow value [280°C/1568 N] | | 17 | 22 |

**Table 1 (3)**

| Comparative Examples | | | Comparative Example 1 | Comparative Example 2 |
|---|---|---|---|---|
| Composition mass% | (A) | Aromatic polycarbonate copolymer | - | - |
| | | End-modified product of the above copolymer | - | - |
| | (B) | Aromatic polycarbonate resin | 100 | - |
| | | End-modified product of the above resin | - | 100 |
| | (C) | Polytetrafluoroethylene (parts by mass) | - | - |
| | | Dimethylsilicone | - | - |
| Marking properties | Color of test piece | | Colorless and transparent | Colorless and transparent |
| | Haze of test piece (%) | | 2 | 2 |
| | Color of marking | | Colorless | Colorless |
| | Conspicuousness of marking | | DD | DD |
| | Laser minimum output required for forming an identifiable marking (W) [fluorescent lamp] | | 1.8 < | 1.8 < |
| | Laser minimum output required for forming an identifiable marking (W) [gray paper sheet] | | 3.6 < | 3.6 < |
| Other physical properties | Flame retardancy [UL94/1.5 mm] | | V-2 | V-2 |
| | Flow value [280°C/1568 N] | | 10 | 20 |

**Table 1 (4)**

| Comparative Examples | | | Comparative Example 3 | Comparative Example 4 |
|---|---|---|---|---|
| Composition mass% | (A) | Aromatic polycarbonate copolymer | - | - |
| | | End-modified product of the above copolymer | - | - |
| | (B) | Aromatic polycarbonate resin | 100 | 96 |
| | | End-modified product of the above resin | - | - |
| | (C) | Polytetrafluoroethylene (parts by mass) | 0.3 | - |
| | | Dimethylsilicone | - | 4 |
| Marking properties | Color of test piece | | Milky white | White |
| | Haze of test piece (%) | | 60 | 40 |
| | Color of marking | | Colorless | Colorless |
| | Conspicuousness of marking | | DD | DD |
| | Laser minimum output required for forming an identifiable marking (W) [fluorescent lamp] | | 1.8 < | 1.8 < |
| | Laser minimum output required for forming an identifiable marking (W) [gray paper sheet] | | 3.6 < | 3.6 < |
| Other physical properties | Flame retardancy [UL94/1.5 mm] | | V-2 NG | V-2 |
| | Flow value [280°C/1568 N] | | 10 | 13 |

### Industrial Applicability

A distinct marking can be formed, through irradiation with a laser beam, on a molded product formed through molding of the laser marking resin composition of the present invention. Therefore, the molded product is suitable for use in, for example, electric/electronic apparatus parts and automobile parts, which display characters, codes, etc. Since the resin composition contains no coloring material, the molded product, on which laser marking can be performed, is transparent. When the molded product is recycled after use thereof, the recycled product is less contaminated with impurities; i.e., the molded product has excellent recyclability.

## Claims

1. A laser marking resin composition comprising
an aromatic polycarbonate copolymer (A) in an amount of 0.2 to 99.9 mass%, the copolymer (A) containing a polyorganosiloxane structural unit in an amount of 0.1 to 50 mass%, and
an aromatic polycarbonate resin (B) in an amount of 0.1 to 99.8 mass%, the aromatic polycarbonate resin (B) being composed of an aromatic polycarbonate structural unit,
optionally having an alkylphenoxy group having a C10-C35 alkyl substituent and serving as an end group;
wherein the amount of the polyorganosiloxane structural unit in the resultant resin composition is 0.1 to 10 mass%;
which further comprises a polytetrafluoroethylene (C), in an amount of 0.01 to 2 parts by mass on the basis of 100 parts by mass of the total amount of the components (A) and (B).

2. A laser marking resin composition according to claim 1, wherein the aromatic polycarbonate copolymer (A) contains a polyorganosiloxane structural unit in an amount of 0.1 to 50 mass%, and has an alkylphenoxy group having a C10-C35 alkyl substituent and serving as an end group.

3. A laser marking resin composition according to claim 1 or 2, wherein the aromatic polycarbonate resin (B) has an alkylphenoxy group having a C10-C35 alkyl substituent and serving as an end group.

4. A molded product formed through molding of a laser marking resin or a laser marking resin composition as recited in any of claims 1 through 3.

5. A molded product according to claim 4, which is an electric/electronic apparatus part, a machine part, or an automobile part.

## Patentansprüche

1. Eine Lasermarkierungs-Harzzusammensetzung umfassend ein aromatisches Polycarbonat-Copolymer (A) in einer menge von 0,2 bis 99,9 Messen-%, wobei das Copolymer (A) eine Polyorganosiloxan-Struktureinheit in einer Menge von 0,1 bis 50 Massen-% enthält, und
ein aromatisches Polycarbonat-Harz (B) in einer Menge von 0,1 bis 99,8 Massen-%, wobei das aromatische Polycarbonat-Harz (B) aus einer aromatischen Polycarbonat Struktureinheit zusammengesetzt ist,
optional mit einer Alkylphenoxy-Gruppe, die einen C10-C35 Alkylsubstituenten aufweist und als Endgruppe dient;
worin die Menge der Polyorganosiloxan-Struktureinheit in der resultierenden Harzzusammensetzung von 0,1 bis 10 Massen-% ist; welches zusätzlich ein Polytetrafluoroethylen (C) in einer Menge von 0,01 bis 2 Masseteilen auf der Basis von 100 Massetelien der gesamten Menge der Komponenten (A) und (B) umfasst.

2. Eine Lasermarkierungs-Harzzusammensetzung nach Anspruch 1, worin das aromatische Polycarbonat-Copolymer (A) eine Polyorganosiloxan-Struktureinheit in einer Menge von 0,1 bis 50 Massen-% enthält und eine Alkylphenoxy Gruppe mit einem C10-C35 Alkylsubstituenten aufweist und als Endgruppe dient,

3. Eine Lasermarkierungs-Harzzusammensetzung nach einem der Ansprüche 1 oder 2, worin das aromatische Polycarbonat Harz (B) eine Alkylphenoxy Gruppe aufweist, mit einem C10-C35 Alkylsubstituenten, der als Endgruppe dient.

4. Ein Formkörper, gebildet durch Formen eines Lasermarkierungs-Harzes oder einer Lasermarkierungs-Harzzusammensetzung nach einem der Ansprüche 1 bis 3.

5. Ein Formkörper nach Anspruch 4, welcher ein elektrisches/elektronisches Geräteteil oder ein Automobilteil ist.

## Revendications

1. Composition de résine pour marquage au laser comprenant un copolymère polycarbonate aromatique (A) en quantité de 0,2 à 99,9% en masse, le copolymère (A) contenant une unité structurelle polyorganosiloxane en quantité de 0,1 à 50% en masse, et
une résine polycarbonate aromatique (B) en quantité de 0,1 à 99,8% en masse, la résine polycarbonate aromatique (B) étant composée d'une unité structurelle polycarbonate aromatique, en cas échéant ayant un groupe alkylephenoxy ayant un substituant alkyl en C10-C35 et servant à titre d'un groupe terminal ;
dans lequel la quantité de l'unité structurelle polyorganosiloxane est de 0,1 à 10 % en masse ;
qui comprend en outre un polytétrafluoroéthylène (C), en quantité de 0,01 à 2 parties en masse sur la base de 100 parties en masse de la quantité totale de constituants (A) et (B).

2. Composition de résine pour marquage au laser selon la revendication 1, dans laquelle le copolymère polycarbonate aromatique (A) contient une unité structurelle polyorganosiloxane en quantité de 0,1 à 50% en masse, et possède un groupe alkylephénoxy avec un substituant alkyle en C10-C35 et servant à titre d'un groupe terminal.

3. Composition de résine pour marquage au laser selon les revendications 1 ou 2, dans laquelle la résine polycarbonate aromatique (B) contient un groupe alkylephénoxy ayant un substituant alkyle en C10-C35 et servant à titre d'un groupe terminal.

4. Produit moulé formé par moulage d'une résine pour marquage au laser ou d'une composition de résine pour marquage au laser selon l'une quelconque des revendications 1 à 3.

5. Produit moulé selon la revendication 4, qui est une pièce d'appareil électrique/électronique, une pièce de machine, ou une pièce automobile.
